# FASCICULE DE BREVET EUROPEEN

(11) **EP 0 697 589 B1**
(45) Date de publication et mention de la délivrance du brevet: **16.04.1997**
(21) Numéro de dépôt: 95401872.7
(22) Date de dépôt: 09.08.1995
(51) Int. Cl.: G01N 1/12

(54) **Appareil et procédé de prélèvement en fût ou récipient d'échantillons liquides de viscosités différentes**
Vorrichtung und Verfahren zur Probenahme von Flüssigkeiten unterschiedlicher Viskositäten aus einem Fass
Apparatus and method for taking samples of liquids of different viscosities from a barrel

(30) Priorité: 10.08.1994 FR 9409898
(43) Date de publication de la demande: 21.02.1996
(73) Titulaire: HOUILLERES DU BASSIN DE LORRAINE, F-57802 Freyming Merlebach (FR)
(72) Inventeur: Geiller, Jean-Paul, F-57880 Guerting (FR)
(74) Mandataire: Rinuy, Santarelli

(56) Documents cités:
- WO-A-94/17386
- DE-A- 4 211 633
- FR-A- 718 955
- FR-A- 2 423 767
- US-A- 1 950 854
- US-A- 2 255 369
- US-A- 3 115 782

## Description

L'industrie en général génère des déchets liquides de toute nature, notamment des huiles, des hydrocarbures et des produits chimiques. Il est actuellement très difficile, voire impossible de définir avec exactitude la proportion des différents composants du contenu d'un fût, surtout lorsque des produits de densité et de viscosité différentes ont été mélangés.

Actuellement, les méthodes d'identification du contenu d'un fût sont très aléatoires. Elles consistent :
- soit à introduire dans le fût une tige rigide ou un fil métallique pour en extraire par contact un produit à identifier ; cette méthode est très rudimentaire et imprécise,
- soit, par le biais d'une méthode plus performante, à prélever des échantillons en plongeant dans le fût un tube d'une certaine section. Lorsque le tube est suffisamment immergé, il suffit de boucher l'extrémité restée à l'air libre, d'extraire rapidement le tube et de recueillir l'échantillon dans un flacon. Cette méthode est contraignante pour échantillonner dans de bonnes conditions car il est impératif de nettoyer ou de remplacer le tube avant de pouvoir effectuer un autre prélèvement.

Ces méthodes, pour aussi simples qu'elles paraissent, ne donnent qu'une vague idée du contenu du fût surtout lorsque les produits mélangés sont de viscosités différentes. Il existe néanmoins des seringues qui, elles, ont l'avantage d'effectuer un travail beaucoup plus propre, mais il subsiste le problème du prélèvement en proportions égales des ingrédients du contenu du fût. De plus, l'utilisation des seringues nécessite obligatoirement l'usage d'un tuyau souple qui à chaque opération est souillé donc impropre à l'échantillonnage suivant.

On connaît d'après le document DE-A-4.211.633 un dispositif d'échantillonnage comportant un piston formé d'un disque et d'une tige, et un tube plongeur dans lequel le disque peut coulissser de façon étanche. Sur le côté du tube plongeur est montée une tige verticale à la base de laquelle est fixée une portion périphérique d'un disque d'obturation adapté, selon la position angulaire de la tige autour de son axe longitudinal, à dégager ou à obturer l'extrémité inférieure du tube plongeur. L'enceinte n'a pas de paroi supérieure. En fonctionnement, la tige de piston (et donc le disque de piston) est positionnée par rapport à l'enceinte (par simple suspension semble-t-il) ; on commande, par rotation de la tige, un dégagement latéral du disque d'obturation et on fait descendre le tube plongeur jusqu'au fond du fût ; on ramène le disque d'obturation en configuration d'obturation. Cette solution a notamment comme inconvénient de ne permettre qu'un échantillonnnage peu fiable et peu pratique du contenu du fût dans sa hauteur : lors de la descente du tube plongeur la configuration déportée du disque d'obturation induit d'une part une tendance au basculement tendant à éloigner le tube d'une configuration verticale, et d'autre part de forts déplacements des matières situées sous le disque d'obturation, et donc provoquer de façon déportée un brassage du liquide d'où une perturbation sensible du volume de liquide au moment même où on cherche à en faire un échantillonnage fiable. Par ailleurs, le dispositif d'échantillonnage pollue nécessairement toutes ses surfaces extérieures, ce qui peut nécessiter des lavages longs et fastidieux avant chaque utilisation. A titre subsidiaire, rien n'est prévu pour permettre la prise d'échantillons à différents niveaux.

Le document US-A-3.115.782 concerne la prise d'échantillons dans un écoulement. Il propose un dispositif comportant, disposés transversalement à une conduite d'écoulement, un tube et une tige de piston munie d'au moins deux disques de piston dont un disque terminal. Le tube est monté dans une bague de retenue fixée de façon amovible sur un tronçon transversal du conduit ; le tube coulisse de façon étanche dans la bague et les disques sont adaptés à coulisser de façon étanche dans le tube. Pour la saisie d'un échantillon, la tige est déplacée sur toute la section du conduit jusqu'à la venue en butée du disque terminal contre la paroi interne à l'opposé du conduit transversal. On laisse se stabiliser l'écoulement puis on fait coulisser de même le tube en sorte d'emprisonner un échantillon dans le tube (ou plusieurs échantillons s'il y a plus de deux disques). La présence de la tige et des disques introduit nécessairement une perturbation substantielle de l'échantillon ; d'autres perturbations sont en outre induites par la descente du tube. Il est important de noter que cet échantillonneur est destiné à un écoulement et que son utilisation dans une masse statique induirait des perturbations rédhibitoires lors de la descente de la tige et de ses disques jusqu'au fond puisqu'il en résulterait un brassage dans tout le volume balayé par les disques : la prise d'échantillon dans ce volume brassé conduirait alors à des résultats qui ne seraient pas représentatifs de la situation antérieure. A titre subsidiaire, cet échantillonneur ne permet aucun réglage en hauteur de la prise d'échantillon. Comme l'échantillon vient au-dessus du disque terminal et autour de la tige, ceux-ci sont souillés au cours de chaque échantillonnage.

Il est à noter que toutes ces méthodes connues ne se préoccupent que très peu des risques d'accidents ou de pollutions liés à la manipulation des produits chimiques dangereux.

L'invention se propose de remédier à tous ces inconvénients grâce à une fonction d'aspiration et de forçage de fluide dans une chambre à vide permettant de prélever de façon simple et rapide dans des fûts ou tout autre récipient à un niveau avantageusement variable, un échantillon de leur contenu fluide, par exemeple statique, qu'il soit liquide ou pâteux, tout en respectant les proportions des différents constituants et grâce à des fonctions de raclage et de nettoyage des parties en contact avec les fluides permettant d'effectuer des échantillonnages successifs de produits divers et variés sans pollution notable des fûts ou flacons d'échantillons entre eux.

L'invention propose à cet effet un appareil de prélèvement d'échantillon fluide pour un fût rempli d'une masse fluide jusqu'à un niveau donné et comportant une paroi sensiblement horizontale munie d'un orifice, comportant :
- un tube plongeur muni d'un élément d'obturation,
- un piston comportant au bout d'une tige un disque adapté à coulisser de manière étanche dans le tube plongeur, et
- des moyens pour positionner temporairement en hauteur le disque du piston en sorte que ce disque reste à une distance donnée du niveau de la surface libre de la masse fluide,
caractérisé en ce qu'il comporte une bague d'appui destinée à porter sur le pourtour de l'orifice et munie d'un passage muni intérieurement d'au moins un joint de raclage et dans lequel le tube plongeur est adapté à coulisser de façon étanche, en ce que le débattement relatif entre le piston et le tube plongeur est tel que le disque reste en permanence dans le tube plongeur, et en ce que l'élément d'obturation est formé d'un embout dans lequel est ménagé un orifice muni d'un moyen anti-retour permettant une entrée de fluide par aspiration dans le tube mais empêchant au moins un échappement de ce fluide par simple gravité.

On appréciera le caractère simple et fiable d'une telle structure, et la minimisation des perturbations avant échantillonnage et des risques de souillures, et ce notamment grâce à la combinaison du fait que seule la face inférieure du disque vient en contact avec le fluide, de l'existence du moyen anti-retour qui permet l'entrée du fluide par aspiration au travers de l'embout tout en empêchant par contre que ce fluide s'échappe par simple gravité (cela n'exclut pas qu'il puisse y avoir, dans certains modes de réalisation, un échappement par refoulement forcé par le piston), et de la bague qui racle en pratique la paroi extérieure du tube au moment de la sortie du tube. La simplicité d'emploi provient d'une part de ce que l'enfoncement des éléments de l'échantillonneur dans le fluide est aisé (pas de déport latéral) et qu'il n'y a aucune manoeuvre particulière nécessaire pour empêcher l'échappement de ce fluide : il suffit donc d'un simple mouvement d'aller-retour. L'effet d'aspiration au fur et à mesure que descent le tube, sans saillie latérale, permet un échantillonnage fidèle.

Selon des enseignements préférés de l'invention, éventuellement combinés :
- la tige du piston fait partie d'une pièce de conformation générale en U renversé, dont une branche est constituée par cette tige et une autre branche comporte en son extrémité inférieure une portée d'appui adaptée à venir en appui sur une surface de référence pour la bague d'appui, ces branches étant reliées par ces moyens de positionnement,
- la portée d'appui est adaptée à venir en appui sur ladite paroi du fût,
- l'autre branche est montée coulissante dans un manchon de guidage solidaire de la bague d'appui à distance dudit passage,
- le manchon comporte une fente longitudinale et ladite autre branche comporte un moyen de préhension venant radialement en saillie vis-à-vis du manchon au travers de cette fente,
- la surface de référence est liée à la bague d'appui,
- les deux branches de la pièce en U sont solidaires l'une de l'autre,
- les deux branches de la pièce en U sont munies d'éléments de réglage en positionnement relatif,
- ladite autre branche comporte en son extrémité supérieure un manchon adapté à recevoir en coulissement la tige du piston et muni d'un élément de serrage,
- la bague d'appui est munie sur sa face inférieure d'au moins deux gradins annulaires de centrage adaptés à au moins deux diamètres d'orifice,
- la bague d'appui comporte une jupe extérieurement filetée,
- le tube plongeur et la tige de piston sont munis de moyens de fixation temporaire,
- l'embout d'aspiration comporte un trou constituant à la fois un trou d'aspiration et un trou de refoulement,
- le trou a un diamètre choisi en fonction de la viscosité de la masse fluide en sorte de pouvoir permettre l'aspiration et le refoulement de l'échantillon par mouvement relatif disque/tube, tout en empêchant un échappement de cet échantillon par simple gravité,
- le trou est ménagé dans un joint élastique fendu et est bordé par une ou plusieurs lèvres,
- le trou est fermé par un clapet anti-fuite comportant un élément d'ouverture accessible de l'extérieur,
- le trou de refoulement est disposé dans la paroi du tube à proximité de son extrémité supérieure, en sorte d'être séparé de l'embout d'aspiration par le disque sur une partie seulement de la course de coulissement relatif entre ce disque et ce tube, un second disque de piston muni d'un clapet anti-retour étant prévu dans le tube sous le disque, pour forcer par mouvement ascendant un refoulement de l'échantillon fluide,
- le deuxième disque constitue l'embout d'aspiration.

L'invention propose également un procédé de prélèvement d'un échantillon fluide dans un fût rempli d'une masse fluide jusqu'à un niveau donné, selon lequel on plonge dans cette masse fluide un tube plongeur muni en son extrémité inférieure d'un orifice d'entrée en faisant coulisser ce tube, de façon étanche, autour d'un disque dont la distance à la surface libre de cette masse fluide est maintenue constante, on sort de la masse fluide le tube plongeur en maintenant le disque dans une position fixe vis-à-vis de ce tube, et on expulse par un trou de refoulement le contenu du tube situé entre l'embout et le disque,
caractérisé en ce qu'on maintient en permanence le disque à l'intérieur du tube, on fait entrer du fluide dans le tube, lors du mouvement de plongée, par aspiration forcée au travers d'un élément d'obturation comportant un orifice muni d'un moyen anti-retour empêchant un échappement de fluide par simple gravité, et on fait coulisser le tube plongeur à l'intérieur d'une bague de raclage fixée au moins temporairement vis-à-vis de ce disque.

De manière préférée, on positionne le disque sensiblement au niveau de la surface libre de cette masse fluide.

Des objets, caractéristiques et avantages de l'invention ressortent de la description qui suit, donnée à titre d'exemple non limitatif, en regard des dessins annexés sur lesquels :
- la figure 1 est une vue en coupe verticale d'un appareil de prélèvement conforme à l'invention,
- les figures 2A, 2B et 2C sont des vues schématiques représentant conjointement le fonctionnement de l'appareil de la figure 1,
- les figures 3A et 3B sont des vues schématiques d'une variante de réalisation de l'appareil de la figure 1,
- la figure 4 est une vue de détail montrant la liaison temporaire des branches du U renversé des figures 3A et 3B,
- la figure 5 est une vue schématique partielle d'encore un autre appareil de prélèvement,
- la figure 6 est une vue schématique d'encore un autre appareil de prélèvement,
- la figure 7 est une vue partielle de l'appareil de la figure 6, selon la ligne de coupe VII-VII, et
- les figures 8A, 8B, et 8C sont des vues de dessus, de côté ou en coupe verticale d'un joint élastique à lèvres et la figure 8D est une vue avec coupe partielle de ce joint engagé dans un embout de tube plongeur.

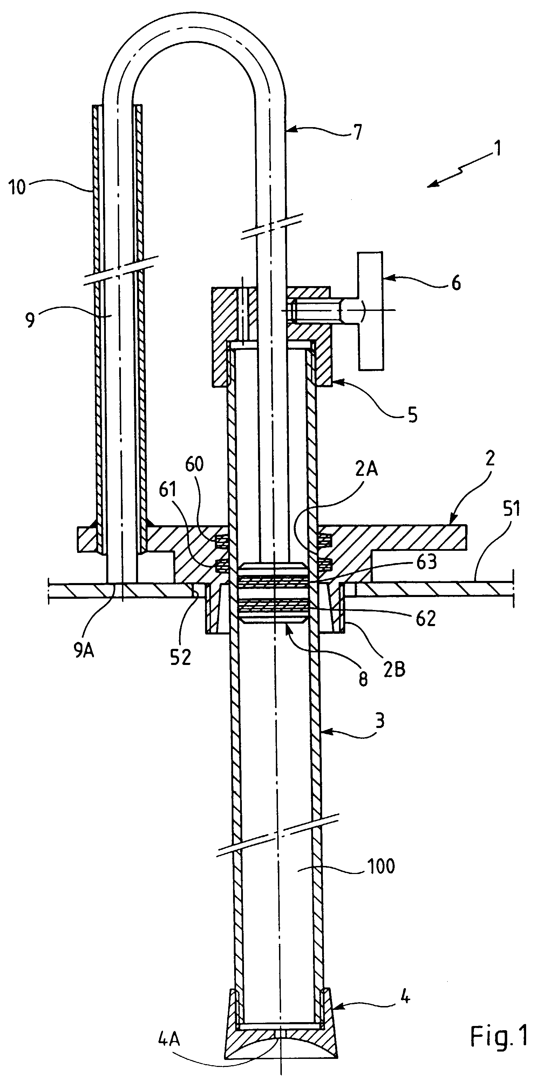

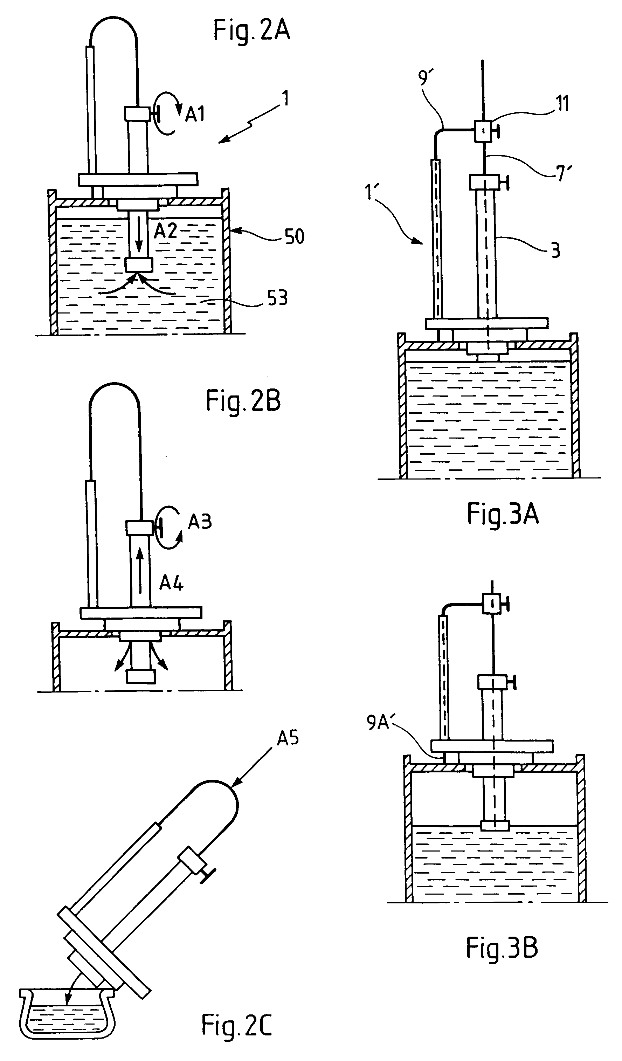

L'appareil de prélèvement représenté aux figures 1 et 2A à 2C sous la référence générale 1 comporte :
- une coupelle ou bague d'appui 2 destinée à porter sur le pourtour de l'orifice 52 d'un fût ou récipient 50 comportant une paroi sensiblement horizontale 51 ; cette coupelle est munie d'un passage 2A muni intérieurement d'au moins un joint d'étanchéité 60 (ici doublé par un second joint d'étanchéité 61),
- un corps ou tube plongeur 3 adapté à coulisser de façon étanche dans le passage 2A et muni en son extrémité inférieure d'un embout d'aspiration 4 ; de la sorte la bague 2 joue une fonction de raclage/nettoyage sur la surface extérieure du tube plongeur 3 ; comme cela apparaîtra plus loin le tube plongeur comporte en outre un trou de refoulement, ici constitué par le trou d'aspiration 4A de l'embout : le tube 3 est fermé à sa partie supérieure par un bouchon percé 5 muni d'une vis de serrage 6,
- un piston comportant, au bout d'une tige 7, un disque 8 adapté à coulisser de manière étanche à l'intérieur du tube plongeur 3 et muni ici à cet effet de joints d'étanchéité, ici au nombre de deux et repérés 62 et 63,
- des moyens pour positionner en hauteur le disque 8 par rapport à la bague d'appui en sorte que ce disque reste à une distance donnée du niveau de la surface libre de la masse fluide 53 contenue dans le fût 50.

Le passage 2A, le tube plongeur 3 et le disque 8 ont ici une section circulaire. Il est bien sûr possible de choisir, en variante, une section polygonale (carrée, rectangulaire, octogonale ou autre) pour des raisons par exemple de guidage.

De manière préférée, la tige 7 du piston fait partie d'une pièce de conformation générale en U renversé, dont une branche est constituée par cette tige 7, et l'autre branche, repérée 9, comporte en son extrémité inférieure une portée d'appui 9A (ici sa tranche) adaptée à venir en appui sur une surface de référence, au moins temporairement liée à la bague d'appui 2.

Dans l'exemple des figures 1, 2A à 2C, les branches 7 et 9 font partie d'une seule et même pièce de sorte que la position du disque 8 est fixée une fois pour toutes vis-à-vis de la portée d'appui 9A ; de préférence ces branches ont des longueurs égales de sorte que le disque 8 est sensiblement au niveau de ladite tranche 9A ; en d'autres termes, le disque est sensiblement au niveau de la surface de référence.

Dans l'exemple précité cette surface de référence est constituée par la paroi 51, à proximité immédiate de l'orifice 52.

Dans l'exemple des figures 1 à 2C, la bague 2 comporte avantageusement une oreille latérale à laquelle est fixé un manchon 10 pour le guidage en coulissement de la branche 9, à distance latérale du passage 2A.

En variante non représentée la surface de référence pourrait être directement solidaire de la bague 2 elle-même.

En fonctionnement, conformément aux figures 2A à 2C, pour effectuer un prélèvement dans le fût 50 (par exemple de 200 litres), on saisit l'appareil 1 et on fait reposer la coupelle 2 au-dessus de l'ouverture 52 du fût 50. La partie en butée 9A de la branche 9 vient en appui sur le dessus 51 du fût immobilisant ainsi le disque 8. Après avoir dévissé la vis 6 du bouchon 5 (action A1), on introduit le corps 3 dans le fût en exerçant sur le corps 3 une poussée vers le bas (action A2) . Une chambre de remplissage 100, délimitée par le piston 8, le corps 3 et l'embout 4 fixé à l'extrémité du corps 3 plongeant dans le récipient, de volume initialement sensiblement nul, se remplit progressivement par du fluide aspiré au travers du trou 4A. Ce trou 4A a en principe une dimension de section inférieure à celle de la section intérieure du corps 3. Grâce à l'étanchéité de la chambre 100 du corps 3 assurée par les joints 62 et 63 (ici à section carrée) du disque 8, il se crée en effet une dépression à l'intérieur de la chambre 100 qui provoque une aspiration à travers du trou 4A des différents composants du fût au fur et à mesure de l'introduction du corps 3 et ceci jusqu'à la profondeur désirée, par exemple le fond du fût, réalisant ainsi un échantillonnage moyen précis (voir la figure 2A).

A ce stade de l'opération, on a un carottage parfait du contenu du fût, lequel carottage est contenu dans la chambre 100 du corps 3 entre le piston 8 et l'embout 4.

Afin d'immobiliser le disque 8 dans le tube plongeur 3, on serre la vis 6 sur le bouchon 5 (action A3) puis on extrait du fût le corps 3 en le faisant coulisser (action A4) à travers la coupelle 2 que l'on maintient en appui contre le fût. Le fait d'avoir immobilisé la tige 7 par rapport au bouchon 5 grâce à la vis 6 permet de remonter le corps 3 avec le disque 8, ceci ayant pour effet de conserver l'échantillon à l'intérieur de la chambre 100, le trou 4A de l'embout 4 étant calibré pour ne pas laisser s'échapper le produit (la calibration tenant compte de la viscosité du produit).

Il est à noter que lors de son extraction à travers la coupelle 2, le corps 3 est nettoyé extérieurement sur toute sa longueur grâce aux joints 60 et 61, de préférence à section carrée, placés dans la coupelle 2 au-passage du corps 3 (figure 2B).

Il suffit maintenant de présenter l'orifice 4A au-dessus du flacon échantillon, de dévisser la vis 6 et de faire redescendre le disque 8, pour permettre de vider intégralement la chambre 100 du corps 3 (action A5 de la figure 2C).

Le disque ayant accompli toute sa course, l'appareil est propre aussi bien à l'intérieur qu'à l'extérieur, et est donc prêt pour un nouvel échantillonnage.

A titre d'exemple, la chambre 100 de remplissage a une capacité d'un demi-litre pour un prélèvement dans un fût d'une hauteur de 870 mm.

La capacité de cette chambre de prélèvement peut varier suivant l'échantillonnage à effectuer et le volume du récipient. Il suffit pour cela de modifier en conséquence les dimensions des différents éléments de l'appareil décrit ci-dessus à titre d'exemple non limitatif.

Dans ce qui précède le fut 50 est supposé plein de sorte que le disque 8 est à peu près au niveau de sa surface libre.

Dans le cas de prélèvement dans des fûts qui ne sont pas totalement remplis, l'air contenu dans la chambre 100 du corps 3 peut gêner l'absorption des produits épais. Il est alors recommandé de modifier la tige 7 afin de pouvoir positionner le piston 8 de manière à ce qu'il soit au niveau du produit absorbé.

Il est possible pour ce faire de modifier la pièce en U de la figure 1 en sorte que sa branche 7 soit plus longue que la branche 9.

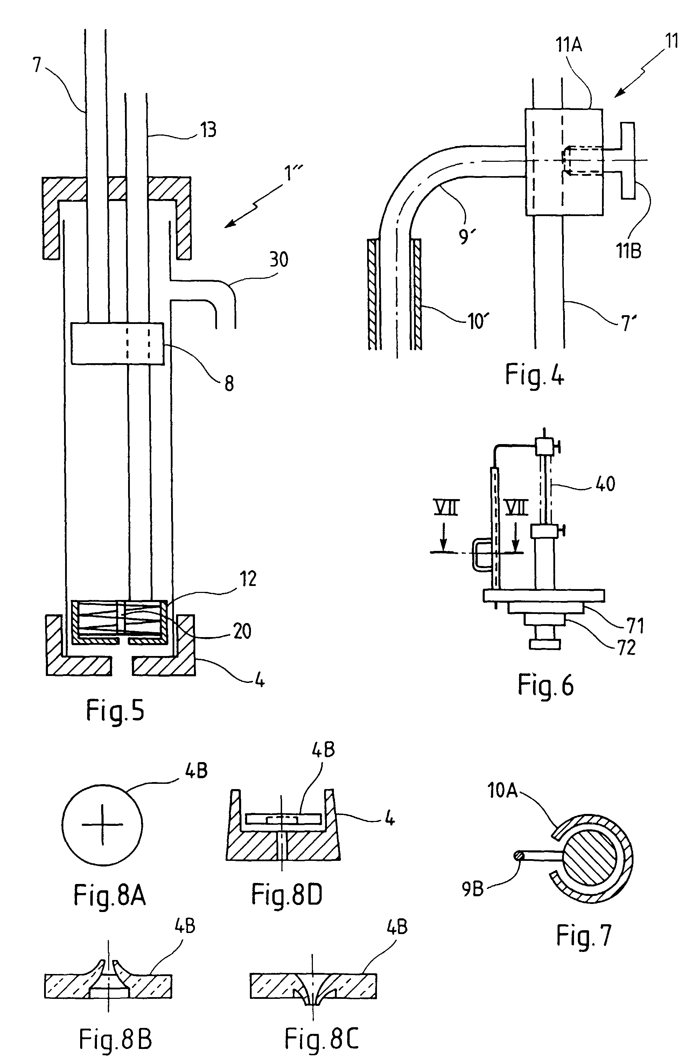

En variante, ainsi que cela est représenté aux figures 3A, 3B et 4, cette pièce de conformation générale en U est formée de deux pièces distinctes : la tige 7' et une pièce 9' en J renversé dont les positions relatives en hauteur peuvent être ajustées grâce à un moyen de fixation temporaire 11 (les éléments similaires à ceux de la figure 1 sont les mêmes à part l'addition de l'indice "prime").

Cet élément de fixation temporaire est ici formé d'un manchon 11A solidaire de la branche 9' adapté à recevoir la tige 7' en coulissement et muni d'une vis de serrage 11B.

Le disque 8 et l'extrémité de la partie 9A' en butée, présentent une différence de niveau qui peut être modifiée grâce au moyen de fixation 11 (la figure 3A correspond à un fût plein tandis que la figure 3B correspond à un fût incomplètement rempli).

On peut également prévoir un dispositif de blocage de la coupelle 2 de manière à la solidariser et, ou de l'étancher par rapport au fût. Par exemple, il est possible d'exécuter un filetage sur l'extérieur de la partie inférieure de la coupelle (par exemple la jupe 2B de la figure 1), lequel filetage permet de visser la coupelle sur tous les fûts équipés d'une ouverture avec filetage.

On peut aussi rajouter un deuxième disque de piston 12 sous le disque de piston 8 avec une autre tige 13. Le disque de piston 12 est alors avantageusement muni d'une soupape schématisée en 20 permettant uniquement le passage du fluide dans un sens vers le haut après la phase de remplissage du corps 3 comme défini précédemment. Il suffit de remonter le disque 12 à l'aide de la tige 13 pour, à travers un embout 30 ménagé dans la paroi du tube 3 à proximité de son extrémité supérieure, prélever directement l'échantillon dans un flacon éprouvette. Il faut ensuite redescendre les disques 8 et 12 de manière à refouler les produits qui auraient été absorbés dans la chambre lors de la remontée du disque 12.

Cet embout 30 reste séparé de l'embout d'aspiration 4 par le disque 8 sur une partie seulement de la course de coulissement relatif entre ce disque et le tube. Il est recommandé en pratique que cet embout ne soit dégagé par le disque 8 qu'à la fin de sa course ascendante.

Cet appareil repéré 1'' à la figure 5 peut se révéler très pratique lorsque l'espace dans lequel évolue l'opérateur est exigu. En effet, l'échantillon se recueille directement à la sortie de l'orifice 30 et ceci alors que l'appareil est toujours plongé dans le fût. Cependant il ne s'avère efficace que lorsque les produits à échantillonner sont de la même famille et les fûts totalement pleins, puisque l'intérieur de l'embout 30 se nettoie difficilement. De plus le réglage de la distance entre le piston 8 et la butée 9A de l'autre branche 9 (comme défini précédemment) n'est plus possible si l'on veut conserver l'orifice 30 d'écoulement en dehors du fût.

Le disque 12 peut éventuellement remplacer l'embout 4.

Afin de faciliter le réglage relatif de la butée d'appui 9A et du disque 8 comme défini ci-dessus, on peut adjoindre à l'appareil (par exemple au tube 3) un détecteur de niveau non représenté qui grâce par exemple à un contact, un flotteur ou tout autre procédé de signalisation, indique à l'opérateur le moment précis ou l'extrémité trouée de l'embout 4 vient en contact avec la surface du liquide contenu dans le récipient.

Pour faciliter les opérations, on peut aussi rajouter à l'appareil un vérin pneumatique de section suffisamment importante ou tout autre dispositif (schématisé en 40 à la figure 6) pour déplacer le corps 3 et lui permettre de parcourir la course nécessaire au remplissage et au vidage de la chambre 100.

Si le calibrage du trou 4A du bouchon 4 ne permet pas de maintenir les liquides à l'intérieur du tube 3, on peut disposer dans ce bouchon un joint à lèvres (figure 8D) dont les lèvres sont orientées vers l'intérieur du tube (figure 8B) ou vers l'extérieur (figure 8C) suivant que l'on vient d'aspirer ou de refouler du fluide. Ce joint ne permettra l'écoulement que lorsqu'on appliquera une pression sur le disque 8.

Si le refoulement doit se faire au travers du même trou, la partie mobile du clapet comporte avantageusement une saillie non représentée accessible de l'extérieur pour forcer l'ouverture, soit manuellement, soit par butée sur une surface d'appui du flacon éprouvette où l'on veut verser le contenu de la chambre 100.

Pour faciliter la manipulation de la tige 7 par l'intermédiaire de la branche 9 on peut prévoir une saignée longitudinale 10A sur le manchon 10 et fixer un élément de manutention tel qu'une poignée 9B sur la tige 9.

On peut prévoir des capuchons en plastique pour protéger la surface de l'extrémité de l'embout 4, lesquels capuchons seront jetés entre deux prélèvements, ceci pour remédier au problème de nettoyage de l'extrémité dudit embout 4.

La coupelle peut comporter inférieurement plusieurs gradins annulaires de centrage 71 et 72 grâce auxquels elle peut s'adapter à plusieurs diamètres d'orifice.

## Revendications

1. Appareil de prélèvement d'échantillon fluide pour un fût rempli d'une masse fluide jusqu'à un niveau donné et comportant une paroi sensiblement horizontale (51) munie d'un orifice (52), comportant :
- un tube plongeur (3) muni d'un élément d'obturation (4),
- un piston comportant au bout d'une tige (7) un disque (8) adapté à coulisser de manière étanche dans le tube plongeur, et
- des moyens (7 + 9 + 9A ; 11) pour positionner temporairement en hauteur le disque du piston en sorte que ce disque reste à une distance donnée du niveau de la surface libre de la masse fluide,
caractérisé en ce qu'il comporte une bague d'appui (2) destinée à porter sur le pourtour de l'orifice (52) et munie d'un passage (2A) muni intérieurement d'au moins un joint de raclage et dans lequel le tube plongeur est adapté à coulisser de façon étanche, en ce que le débattement relatif entre le piston et le tube plongeur est tel que le disque reste en permanence dans le tube plongeur, et en ce que l'élément d'obturation est formé d'un embout (4) dans lequel est ménagé un trou (4A) muni d'un moyen anti-retour permettant une entrée de fluide par aspiration dans le tube mais empêchant au moins un échappement de ce fluide par simple gravité.

2. Appareil de prélèvement selon la revendication 1, caractérisé en ce que la tige du piston fait partie d'une pièce de conformation générale en U renversé, dont une branche (7, 7') est constituée par cette tige et une autre branche (9, 9') comporte en son extrémité inférieure une portée d'appui (9A) adaptée à venir en appui sur une surface de référence (51) pour la bague d'appui, ces branches étant reliées par ces moyens de positionnement.

3. Appareil de prélèvement selon la revendication 2, caractérisé en ce que cette portée d'appui est adaptée à venir en appui sur ladite paroi (51) du fût.

4. Appareil de prélèvement selon la revendication 3, caractérisé en ce que cette autre branche est montée coulissante dans un manchon de guidage (10) solidaire de la bague d'appui à distance dudit passage.

5. Appareil de prélèvement selon la revendication 4, caractérisé en ce que le manchon comporte une fente (10A) longitudinale et ladite autre branche comporte un moyen de préhension (9B) venant radialement en saillie vis-à-vis du manchon au travers de cette fente,

6. Appareil de prélèvement selon la revendication 2, caractérisé en ce que la surface de référence est liée à la bague d'appui.

7. Appareil de prélèvement selon l'une quelconque des revendications 2 à 6, caractérisé en ce que les deux branches de la pièce en U sont solidaires l'une de l'autre.

8. Appareil de prélèvement selon l'une quelconque des revendications 2 à 6, caractérisé en ce que les deux branches de la pièce en U sont munies d'éléments (11) de réglage en positionnement relatif.

9. Appareil de prélèvement selon la revendication 8, caractérisé en ce que ladite autre branche comporte en son extrémité supérieure un manchon (11A) adapté à recevoir en coulissement la tige du piston et muni d'un élément de serrage (11B).

10. Appareil de prélèvement selon l'une quelconque des revendications 1 à 9, caractérisé en ce que la bague d'appui est munie sur sa face inférieure d'au moins deux gradins annulaires de centrage (71, 72) adaptés à au moins deux diamètres d'orifice.

11. Appareil de prélèvement selon l'une quelconque des revendications 1 à 10, caractérisé en ce que la bague d'appui comporte une jupe extérieurement filetée (2B).

12. Appareil de prélèvement selon l'une quelconque que des revendications 1 à le 11, caractérisé en ce tube plongeur et la tige de piston sont munis de moyens de fixation temporaire (5, 6).

13. Appareil de prélèvement selon l'une quelconque des revendications 1 à 12, caractérisé en ce que l'embout (4) comporte un trou (4A) constituant à la fois un trou d'aspiration et un trou de refoulement.

14. Appareil de prélèvement selon la revendication 13, caractérisé en ce que ce trou a un diamètre choisi en fonction de la viscosité de la masse fluide en sorte de pouvoir permettre l'aspiration et le refoulement de l'échantillon par mouvement relatif disque/tube, tout en empêchant un échappement de cet échantillon par simple gravité.

15. Appareil de prélèvement selon la revendication 13, caractérisé en ce que ce trou est ménagé dans un joint élastique fendu et est bordé par une ou plusieurs lèvres.

16. Appareil de prélèvement selon la revendication 13, caractérisé en ce que le trou est fermé par un clapet anti-fuite comportant un élément d'ouverture accessible de l'extérieur.

17. Appareil de prélèvement selon l'une quelconque des revendications 1 à 12, caractérisé en ce qu'il comporte un trou de refoulement (30) qui est disposé dans la paroi du tube (3) à proximité de son extrémité supérieure, en sorte d'être séparé de l'embout (4) par le disque (8) sur une partie seulement de la course de coulissement relatif entre ce disque (8) et ce tube, un second disque (12) de piston muni d'un clapet anti-retour étant prévu dans le tube sous le disque (8), pour forcer par mouvement ascendant un refoulement de l'échantillon fluide.

18. Appareil de prélèvement selon la revendication 17, caractérisé en ce que le deuxième disque (12) constitue l'embout (4).

19. Procédé de prélèvement d'un échantillon fluide dans un fût rempli d'une masse fluide jusqu'à un niveau donné, selon lequel on plonge dans cette masse fluide un tube plongeur muni en son extrémité inférieure d'un orifice d'entrée en faisant coulisser ce tube, de façon étanche, autour d'un disque dont la distance à la surface libre de cette masse fluide est maintenue constante, on sort de la masse fluide le tube plongeur en maintenant le disque dans une position fixe vis-à-vis de ce tube, et on expulse par un trou de refoulement le contenu du tube situé entre l'embout et le disque,
caractérisé en ce qu'on maintient en permanence le disque à l'intérieur du tube, on fait entrer du fluide dans le tube, lors du mouvement de plongée, par aspiration forcée au travers d'un élément d'obturation comportant un orifice muni d'un moyen anti-retour empêchant un échappement de fluide par simple gravité, et on fait coulisser le tube plongeur à l'intérieur d'une bague de raclage fixée au moins temporairement vis-à-vis de ce disque.

20. Procédé de prélèvement selon la revendication 19, caractérisé en ce qu'on positionne le disque sensiblement au niveau de la surface libre de cette masse fluide.

## Patentansprüche

1. Vorrichtung zur Probeentnahme von Flüssigkeiten für ein Faß, das bis zu einem vorgegebenen Niveau mit einer flüssigen Masse angefüllt ist und das eine im wesentlichen horizontale Wand (51) aufweist, die mit einer Öffnung (52) versehen ist, aufweisend:
- ein Tauchrohr (3), das mit einem Verschlußelement (4) versehen ist,
- einen Kolben, der am Ansatz eines Schafts (7) eine Scheibe (8) aufweist, die dafür ausgelegt ist, im Tauchrohr abdichtend zu gleiten, und
- Mittel (7 + 9 + 9 A; 11) zur zeitweiligen Höheneinstellung der Scheibe des Kolbens, so daß diese Scheibe in einem vorgegebenen Abstand vom Niveau der freien Oberfläche der flüssigen Masse bleibt,
dadurch gekennzeichnet, daß sie einen Auflagering (2) aufweist, der dafür vorgesehen ist, auf dem äußeren Umfang der Öffnung (52) zu tragen, und der mit einem Durchgang (2A) versehen ist, welcher intern mit mindestens einem Abstreifring versehen ist und in welchem abdichtend zu gleiten das Tauchrohr ausgelegt ist, dadurch, daß die relative Verschiebbarkeit des Kolbens zum Tauchrohr so ist, daß die Scheibe ständig im Tauchrohr bleibt, und dadurch, daß das Verschlußelement von einem Ansatzstück (4) gebildet wird, in dem ein Loch (4A) ausgespart ist, welches mit einem Rücklaufsicherungsmittel versehen ist, das im Rohr einen Flüssigkeitseintritt durch Ansaugung zuläßt, aber zumindest ein Entweichen dieser Flüssigkeit durch die bloße Erdanziehungskraft verhindert.

2. Entnahmevorrichtung nach Anspruch 1, dadurch gekennzeichnet, daß der Schaft des Kolbens Teil eines Stücks von der allgemeinen Form eines umgekehrten U ist, dessen einer Zweig (7,7') durch diesen Schaft gebildet wird und dessen anderer Zweig (9,9') an seinem unteren Ende eine Auflagefläche (9A) aufweist, die dafür ausgelegt ist, auf einer Bezugsoberfläche (51) für den Auflagering zur Auflage zu kommen, wobei diese Zweige durch diese Einstellmittel verbunden sind.

3. Entnahmevorrichtung nach Anspruch 2, dadurch gekennzeichnet, daß diese Auflagefläche dafür ausgelegt ist, auf der Wand (51) des Fasses zur Auflage zu kommen.

4. Entnahmevorrichtung nach Anspruch 3, dadurch gekennzeichnet, daß dieser andere Zweig gleitend in einer Führungsmuffe (10) angebracht ist, die in einem Abstand vom Durchgang einstückig mit dem Auflagering ist.

5. Entnahmevorrichtung nach Anspruch 4, dadurch gekennzeichnet, daß die Muffe einen longitudinalen Spalt (10A) aufweist und daß der andere Zweig ein Greifmittel (9B) aufweist, das durch diesen Spalt radial ausladend gegenüber der Muffe steht.

6. Entnahmevorrichtung nach Anspruch 2, dadurch gekennzeichnet, daß die Bezugsoberfläche mit dem Auflagering verbunden ist.

7. Entnahmevorrichtung nach einem der Ansprüche 2 bis 6, dadurch gekennzeichnet, daß die beiden Zweige des U-förmigen Stücks miteinander einstückig sind.

8. Entnahmevorrichtungen nach einem der Ansprüche 2 bis 6, dadurch gekennzeichnet, daß die beiden Zweige des U-förmigen Stücks mit Elementen (11) zur Regulierung der relativen Einstellung zueinander versehen sind.

9. Entnahmevorrichtung nach Anspruch 8, dadurch gekennzeichnet, daß der andere Zweig an seinem oberen Ende eine Muffe (11A) aufweist, die dafür ausgelegt ist, den Schaft des Kolbens gleitend aufzunehmen, und die mit einem Klemmelement (11B) versehen ist.

10. Entnahmevorrichtung nach einem der Ansprüche 1 bis 9, dadurch gekennzeichnet, daß der Auflagering auf seiner Unterseite mit mindestens zwei ringförmigen Zentrierungsstufen (71, 72) versehen ist, die für mindestens zwei Öffnungsdurchmesser ausgelegt sind.

11. Entnahmevorrichtung nach einem der Ansprüche 1 bis 10, dadurch gekennzeichnet, daß der Auflagering eine mit einem Außengewinde versehene Auskleidung (2B) aufweist.

12. Entnahmevorrichtung nach einem der Ansprüche 1 bis 11, dadurch gekennzeichnet, daß das Tauchrohr und der Schaft des Kolbens mit Mitteln (5, 6) zur zeitweiligen Befestigung versehen sind.

13. Entnahmevorrichtung nach einem der Ansprüche 1 bis 12, dadurch gekennzeichnet, daß das Ansatzstück (4) ein Loch (4A) aufweist, das gleichzeitig ein Ansaugloch und ein Stauloch bildet.

14. Entnahmevorrichtung nach Anspruch 13, dadurch gekennzeichnet, daß dieses Loch einen Durchmesser hat, der in Abhängigkeit von der Viskosität der flüssigen Masse so ausgewählt ist, daß er das Ansaugen und das Stauen der Probe durch eine relative Bewegung zwischen Scheibe und Rohr zulassen kann, wobei er ein Entweichen dieser Probe durch die bloße Erdanziehungskraft verhindert.

15. Entnahmevorrichtung nach Anspruch 13, dadurch gekennzeichnet, daß dieses Loch in einer geschlitzten elastischen Dichtung ausgespart ist und durch eine oder mehrere Lippen begrenzt ist.

16. Entnahmevorrichtung nach Anspruch 13, dadurch gekennzeichnet, daß dieses Loch durch ein Rückschlagventil verschlossen ist, das ein von außen zugängliches Öffnungselement aufweist.

17. Entnahmevorrichtung nach einem der Ansprüche 1 bis 12, dadurch gekennzeichnet, daß sie ein Stauloch (30) aufweist, das in der Rohrwand (3) in der Nähe seines oberen Endes so angeordnet ist, daß es durch die Scheibe (8) vom Ansatzstück (4) auf nur einem Teil des relativen Gleithubs zwischen dieser Scheibe (8) und diesem Rohr getrennt ist, wobei eine zweite Kolbenscheibe (12), die mit einem Rückschlagventil versehen ist, im Rohr unter der Scheibe (8) vorgesehen ist, um durch aufsteigende Bewegung eine Stauung der Flüssigkeitsprobe zu erzwingen.

18. Entnahmevorrichtung nach Anspruch 17, dadurch gekennzeichnet, daß die zweite Scheibe (12) das Ansatzstück (4) bildet.

19. Verfahren zur Entnahme einer Flüssigkeitsprobe in einem Faß, das bis zu einem vorgegebenen Niveau mit einer flüssigen Masse angefüllt ist, gemäß dem man in diese flüssige Masse ein Tauchrohr eintaucht, das an seinem unteren Ende mit einer Eintrittsöffnung versehen ist, wobei man dieses Rohr abdichtet um eine Scheibe gleiten läßt, deren Abstand zur freien Oberfläche dieser flüssigen Masse konstant gehalten wird, das Tauchrohr der flüssigen Masse entnimmt, wobei man die Scheibe in einer festen Position gegenüber diesem Rohr hält, und durch ein Stauloch den Inhalt des Rohrs, der sich zwischen dem Ansatzstück und der Scheibe befindet, austreibt, dadurch gekennzeichnet, daß man die Scheibe ständig im Inneren des Rohrs hält, bei der Tauchbewegung Flüssigkeit in das Rohr durch erzwungene Ansaugung über ein Verschlußelement eintreten läßt, das eine Öffnung aufweist, die mit einem Rücklaufsicherungsmittel versehen ist, das ein Entweichen der Flüssigkeit durch die bloße Erdanziehungskraft verhindert, und das Tauchrohr im Inneren eines Abstreifrings gleiten läßt, der zumindest zeitweilig gegenüber dieser Scheibe befestigt ist.

20. Entnahmeverfahren nach Anspruch 19, dadurch gekennzeichnet, daß man die Scheibe im wesentlichen auf der Höhe der freien Oberfläche dieser flüssigen Masse positioniert.

## Claims

1. Device for taking samples of fluid from a drum filled with a mass of fluid up to a given level and having a substantially horizontal wall (51) provided with a filler orifice (52), including:
- a dip-tube (3) having a closure member (4),
- a piston including at the end of a piston rod (7) a disc (8) adapted to slide in the dip-tube, to which it sealed, and
- means (7 + 9 + 9A; 11) for temporarily positioning the piston disc in the heightwise direction so that this disc remains at a given distance from the surface of the fluid mass,
characterised in that it includes a support ring (2) adapted to rest on the surround of the filler orifice (52) and having a passage (2A) having on the inside at least one scraper seal in which the dip-tube is adapted to slide, and to which it is sealed, in that relative movement between the piston and the dip-tube is such that the disc remains at all times in the dip-tube, and in that the closure member is formed as an end-piece (4) in which is a hole (4A) provided with non-return means enabling fluid to be aspirated into the tube but preventing fluid escaping therefrom under its own weight.

2. Sampling device according to claim 1 characterised in that the piston rod is part of a generally inverted U-shaped member of which one branch (7, 7') is constituted by the rod and another branch (9, 9') has at its lower end a bearing surface (9A) adapted to bear on a reference surface (51) for the support ring, these branches being linked by these positioning means.

3. Sampling device according to claim 2 characterised in that this bearing surface is adapted to bear on said wall (51) of the drum.

4. Sampling device according to claim 3 characterised in that said other branch is adapted to slide in a guide sleeve (10) attached to the support ring at a distance from said passage.

5. Sampling device according to claim 4 characterised in that the sleeve includes a longitudinal slot (10A) and said other branch includes holding means (9B) projecting radially from the sleeve through said slot.

6. Sampling device according to claim 2 characterised in that the reference surface is linked to the support ring.

7. Sampling device according to any one of claims 2 to 6 characterised in that the two branches of the U-shaped member are fastened together.

8. Sampling device according to any one of claims 2 to 6 characterised in that the two branches of the U-shaped member are provided with means (11) for adjusting their relative position.

9. Sampling device according to claim 8 characterised in that said other branch includes at its upper end a sleeve (11A) adapted to receive the piston rod which slides in it and provided with clamping means (11B).

10. Sampling device according to any one of claims 1 to 9 characterised in that the support ring has on its lower face at least two annular centring steps (71, 72) matching at least two filler orifice diameters.

11. Sampling device according to any one of claims 1 to 10 characterised in that the support ring includes an externally screwthreaded skirt (2B).

12. Sampling device according to any one of claims 1 to 11 characterised in that the dip-tube and the piston rod are provided with temporary fixing means (5, 6).

13. Sampling device according to any one of claims 1 to 12 characterised in that the end-piece (4) includes a hole (4A) constituting an aspiration hole and a discharge hole.

14. Sampling device according to claim 13 characterised in that said hole has a diameter chosen according to the viscosity of the fluid mass to enable aspiration and discharge of the sample by relative disc/tube movement whilst preventing the sample escaping under its own weight.

15. Sampling device according to claim 13 characterised in that said hole is formed in a split elastic seal and is flanked by one or more lips.

16. Sampling device according to claim 13 characterised in that the hole is closed by an anti-leak valve incorporating an opening member accessible from the outside.

17. Sampling device according to any one of claims 1 to 12 characterised in that it includes a discharge hole (30) in the wall of the tube (3) near its upper end so that it is separated from the end-piece (4) by the disc (8) over part only of the relative sliding travel between the disc (8) and the tube, a second piston disc (12) provided with a non-return valve being provided in the tube under the disc (8) to force discharge of the fluid sample by upward movement.

18. Sampling device according to claim 17 characterised in that the second disc (12) constitutes the end-piece (4).

19. Method of taking a sample of fluid from a drum filled with a mass of fluid up to a given level whereby a dip-tube is immersed in the fluid mass which has at its lower end an entry orifice, by sliding the tube around a disc to which it is sealed with the distance between the disc and the surface of the fluid mass kept constant, the dip-tube is removed from the fluid mass with the disc held in a fixed position relative to the tube, and the content of the tube between the end-piece and the disc is expelled through a discharge hole,
characterised in that the disc remains inside the tube at all times, the fluid is caused to enter the tube during the immersion movement by forced aspiration through a closure member including an orifice provided with non-return means preventing escape of the fluid under its own weight, and the dip-tube slides inside a scraper ring fixed at least temporarily to the disc.

20. Sampling method according to claim 19 characterised in that in use the disc is positioned substantially level with the surface of the fluid mass.
